# EUROPEAN PATENT APPLICATION

(11) **EP 4 349 465 A1**
(43) Date of publication of application: **10.04.2024**
(21) Application number: 22815837.4
(22) Date of filing: 17.05.2022
(51) Int. Cl.: B01D 63/02, B01D 53/22, H01M 8/04

(54) **HOLLOW FIBER MEMBRANE MODULE AND DEHUMIDIFICATION/HUMIDIFICATION DEVICE**

(30) Priority: 02.06.2021 JP 2021092811
(71) Applicant: NOK Corporation, Minato-ku, Tokyo 105-8585 (JP)
(72) Inventor: ITO, Yosuke, Kikugawa-shi, Shizuoka 437-1507 (JP)
(74) Representative: Global IP Europe Patentanwaltskanzlei
(86) International application number: PCT/JP2022/020488
(87) International publication number: WO 2022/255085

(57) **Abstract**

A hollow fiber membrane module and a dehumidification/humidification device are provided, which are capable of improving a rate of contribution hollow fiber membranes to a membrane separation action and improving dehumidification/humidification performance. An outlet portion 122 that makes an annular gap S and the outside of an outer case 100 communicate with each other is provided on one end side of the outer case 100, an inner case 200 is provided with a hollow portion opening to the other end side and also provided with a plurality of windows 212a that make the hollow portion and the annular gap S communicate with each other, and a plurality of partition walls 220 that divide a space, in which a fluid flows, into a plurality of spaces in a circumferential direction are provided in the annular gap S.

## Description

### [Technical Field]

The present invention relates to a hollow fiber membrane module and a dehumidification/humidification device.

### [Background Art]

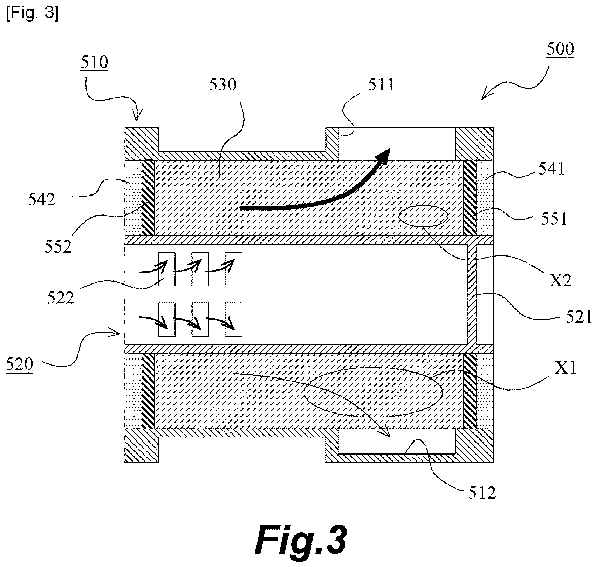

Hollow fiber membrane modules provided in humidification devices for fuel cells are required to have improved humidification performance, reduced pressure loss, and be made small. In order to realize these, it is necessary to increase a rate of contribution of a hollow fiber membrane, which is provided in a case, to a membrane separation action. Consequently, a technique for meeting these requirements by configuring the case of a hollow fiber membrane module to be a double case is known. A hollow fiber membrane module according to such an example of the related art will be described with reference to Fig. 3. Fig. 3 is a schematic cross-sectional view of a hollow fiber membrane module according to an embodiment of the related art.

A hollow fiber membrane module 500 illustrated in the drawing includes a cylindrical outer case 510, an inner case 520 disposed inside the outer case 510, and a plurality of hollow fiber membranes 530 provided in an annular gap between the outer case 510 and the inner case 520. The hollow fiber membrane module 500 also includes a pair of sealing fixing portions 541 and 542 and a pair of buffering portions 551 and 552. The sealing fixing portions 541 and 542 play a role of sealing the above-described annular gap in a state in which the inside of each of hollows of hollow fiber membranes 530 is open on one end side and the other end side of the outer case 510 and the inner case 520, and fixing the plurality of hollow fiber membranes 530 to the outer case 510 and the inner case 520.

In the outer case 510, an outlet portion 511 that makes the annular gap and the outside of the outer case 510 communicate with each other is provided in at least one place in a circumferential direction at a position closer to one end of the outer case 510. In a portion where the portion 511 is not provided, a portion 512 of the inner peripheral surface of the outer case 510 has an inner diameter larger than that of other portions so as not to be in contact the outer peripheral surface of a bundle constituted of the plurality of hollow fiber membranes 530.

A partition wall 521 is provided inside the inner case 520, and a plurality of windows 522 that make the hollow portion inside the inner case 520 and the annular gap communicate with each other are provided on the other end side of the partition wall 521.

With respect to the hollow fiber membrane module 500 configured as described above, a wet gas is supplied to the hollow portion in the inner case 520, and a dry gas is supplied into each of the hollows of the hollow fiber membranes 530 from the sealing fixing portion 541 side. Thereby, as indicated by solid arrows in the drawing, the wet gas enters the above-described annular gap through the plurality of windows 522, passes through the outside of the hollow fiber membranes 530, and flows to the outside of the outer case 510 from the outlet portion 511. The dry gas flows through the inside of the hollow fiber membrane 530 from the sealing fixing portion 541 on the one end side toward the sealing fixing portion 542 on the other end side. Thereby, due to a membrane separation action of the hollow fiber membranes 530, moisture in the wet gas moves to the dry gas side, and the dry gas is humidified.

In the case of a general hollow fiber membrane module, a plurality of hollow fiber membranes are provided in a single tubular case, and an inlet and an outlet of a wet gas are provided in the case. Thus, the hollow fiber membranes disposed in the vicinity of the center of the case tend not to contribute much to a membrane separation action. On the other hand, in the case of the hollow fiber membrane module 500 according to the above-described example of the related art illustrated in Fig. 3, all of the plurality of hollow fiber membranes 530 can contribute to a membrane separation action, and thus it is possible to meet the above-described requirements.

However, even in the case of the hollow fiber membrane module 500 described above, a wet gas tends to flow predominantly through a portion at a shortest distance from the window 522 to the outlet portion 511. For this reason, it has been ascertained that a region away from the outlet portion 511 (near X1 in the drawing) and a region on the one end side and radially inner side (near X2 in the drawing) among the plurality of hollow fiber membranes 530 do not tend to contribute to a membrane separation action. In this manner, there is still room for improvement.

### [Citation List]

### [Patent Literature]

[PTL 1]
   Japanese Patent Application Publication No. 2002-147802
[PTL 2]
   Japanese Patent Application Publication No. 2005-265196

### [Summary of Invention]

### [Technical Problem]

An object of the present invention is to provide a hollow fiber membrane module and a dehumidification/humidification device which are capable of improving a rate of contribution of hollow fiber membranes to a membrane separation action and improving dehumidification/humidification performance.

### [Solution to Problem]

The present invention adopts following means in order to solve the above-described problems.

That is, a hollow fiber membrane module of the present invention is a hollow fiber membrane module including an outer case that has a tubular shape, an inner case that is disposed inside the outer case, a plurality of hollow fiber membranes that are provided in an annular gap between the outer case and the inner case, and a pair of sealing fixing portions that seal the annular gap in a state in which the inside of each of hollows of the hollow fiber membranes is open on one end side and another end side of the outer case and the inner case, and fix the plurality of hollow fiber membranes to the outer case and the inner case, wherein an outlet portion making the annular gap and the outside of the outer case communicate with each other is provided on the one end side of the outer case, and the inner case is provided with a hollow portion that opens to the other end side and also provided with a plurality of windows making the hollow portion and the annular gap communicate with each other, and a plurality of partition walls dividing a space, in which a fluid flows, into a plurality of spaces in a circumferential direction are provided in the annular gap.

According to the present invention, a fluid that is supplied to the hollow portion and enters the annular gap from the plurality of windows flows through the spaces separated by the plurality of partition walls, and thus a flow rate of the fluid that flows directly to the outlet portion can be reduced. Thus, it is possible to improve a rate of contribution of the hollow fiber membranes to a membrane separation action.

The plurality of partition walls may be provided integrally with the inner case.

Thereby, a separate operation of installing the partition walls is not required

The plurality of partition walls may be constituted of a plurality of plate-shaped portions radially extending outward from an outer peripheral surface of a tubular portion of the inner case.

Thereby, it is possible to curb reduction in the volume of the annular gap and to curb reduction in the number of hollow fiber membranes that can be filled thereinto.

An annular space connecting the plurality of spaces, which are separated by the plurality of partition walls, and the outlet portion may be provided outside the annular gap in a radial direction.

Thereby, it is not necessary to provide the outlet portion corresponding to each of the spaces separated by the partition walls.

The inner case may be provided with a widened portion, the width of which in a direction perpendicular to a direction from the one end side to the other end side expands from the one end side to the other end side, and the plurality of windows may be provided in the widened portion.

By adopting such a configuration, in the vicinity of the windows, a fluid passing through the outside of the hollow fiber membranes and a fluid passing through the inside of the hollows of the hollow fiber membranes can easily flow in opposite directions.

A dehumidification/humidification device of the present invention is a dehumidification/humidification device including the hollow fiber membrane module mentioned above, a wet gas supply device that supplies a wet gas to the hollow portion, and a dry gas supply device that supplies a dry gas having a humidity lower than that of the wet gas from the sealing fixing portion on the one end side to the inside of each of the hollows of the plurality of hollow fiber membranes.

The above-described configurations can be adopted in combination as far as possible.

### [Advantageous Effects of Invention]

As described above, according to the present invention, it is possible to improve a rate of contribution of hollow fiber membranes to a membrane separation action and to improve dehumidification/humidification performance.

### [Brief Description of Drawings]

[Fig. 1]

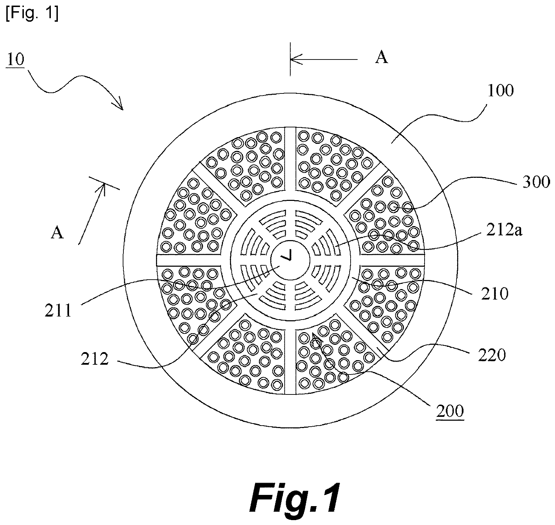

   Fig. 1 is a plan view of a hollow fiber membrane module according to an embodiment of the present invention.
[Fig. 2]

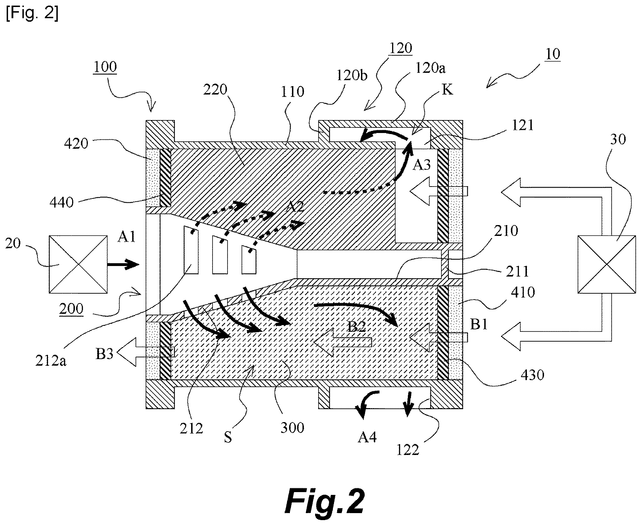

   Fig. 2 is a schematic configuration diagram of a dehumidification/humidification device according to the embodiment of the present invention.
[Fig. 3]
   Fig. 3 is a schematic cross-sectional view of a hollow fiber membrane module according to an embodiment of the related art.

### [Description of Embodiments]

Modes for carrying out the present invention will be described in detail below based on embodiments with reference to the drawings. However, unless otherwise specified, dimensions, materials, shapes, and relative arrangements of components described in the embodiments are not intended to limit the scope of the present invention.

### (Embodiment)

A hollow fiber membrane module and a dehumidification/humidification device according to an embodiment of the present invention will be described with reference to Figs. 1 and 2. Fig. 1 is a plan view of the hollow fiber membrane module according to the embodiment of the present invention. Fig. 2 is a schematic configuration diagram of the dehumidification/humidification device according to the embodiment of the present invention. In Fig. 2, the hollow fiber membrane module is illustrated as a schematic cross-sectional view. The cross-sectional view corresponds to an AA cross-sectional view of a hollow fiber membrane module in Fig. 1.

### <Dehumidification/humidification device>

The dehumidification/humidification device according to this embodiment includes a hollow fiber membrane module 10, a wet gas supply device 20, and a dry gas supply device 30. The wet gas supply device 20 is configured to supply a wet gas to the outside of hollow fiber membranes 300 provided in the hollow fiber membrane module 10. The dry gas supply device 30 is configured to supply a dry gas with a humidity lower than that of the wet gas into each of the hollows of the plurality of hollow fiber membranes 300. Thereby, moisture in the wet gas moves to the dry gas side due to a membrane separation action of the hollow fiber membranes 300. Thus, the dry gas is humidified, and the wet gas is dehumidified, and thus the dehumidification/humidification device can be used as both a humidification device and a dehumidification device. The dehumidification/humidification device according to this embodiment can be suitably used as a humidification device for humidifying an electrolyte membrane provided in a fuel cell. In this case, wet air generated in the fuel cell is used as the wet gas described above. The humidified gas (air) is supplied to the electrolyte membrane provided in the fuel cell, and the electrolyte membrane is maintained in a wet state. Here, as the material of the hollow fiber membrane 300, for example, polyphenylsulfone (PPSU) or the like having a property of allowing moisture to permeate therethrough by a capillary condensation mechanism by controlling a pore size can be suitably used. A hydrophilic hollow fiber membrane can be obtained by spinning using a membrane forming solution obtained by adding PPSU and a hydrophilic polymer (polyvinylporidone) to a solvent when adjusting the membrane forming solution (raw material of the hollow fiber membrane). Nafion (registered trademark), which is a hydrophilic material having a property of allowing moisture to permeate therethrough by dissolution and diffusion, can also be used. Since the above-describe material has a low elution property and a high strength, it can be suitably used for the dehumidification/humidification device.

### <Hollow fiber membrane module>

The hollow fiber membrane module 10 according to this embodiment will be described in more detail. The hollow fiber membrane module 10 includes a tubular outer case 100, an inner case 200 disposed inside the outer case 100, and a plurality of hollow fiber membranes 300 provided in an annular gap S between the outer case 100 and the inner case 200. The hollow fiber membrane module 10 includes a pair of sealing fixing portions 410 and 420 and a pair of buffering portions 430 and 440. The sealing fixing portions 410 and 420 have a role of sealing the above-described annular gap S with the inside of each of the hollows of the hollow fiber membranes 300 opened on one end side (the right side in Fig. 2) and the other end side (the left side in Fig. 2) of the outer case 100 and the inner case 200, and fixing the plurality of hollow fiber membranes 300 to the outer case 100 and the inner case 200. The sealing fixing portions 410 and 420 are obtained by hardening a potting material such as an epoxy resin. The pair of buffering portions 430 and 440 are formed of a highly flexible material such as silicon. By providing the buffering portions 430 and 440, it is possible to curb the shaking of the hollow fiber membranes 300 in the vicinity of the sealing fixing portions 410 and 420 and to curb the damage of the hollow fiber membranes 300 in the vicinity of interfaces with the sealing fixing portions 410 and 420. For convenience of description, hereinafter, the right side in the hollow fiber membrane module 10 in Fig. 2 will be referred to as "one end side" and the left side will be referred to as "the other end side".

The outer case 100 includes a tubular case main body 110. In this embodiment, the case main body 110 is constituted by a substantially cylindrical portion, but its shape is not limited. For example, various shapes such as a prismatic shape can be adopted. The outer case 100 is provided with a double pipe portion 120 that forms an annular space K outside the annular gap S in the radial direction on one end side. The double pipe portion 120 according to this embodiment includes a cylindrical portion 120a having an outer diameter and an inner diameter larger than those of the case main body 110, and a connecting portion 120b that connects the other end side of the cylindrical portion 120a and the case main body 110. An outlet portion 122 that makes the annular gap S and the outside of the outer case 100 communicate with each other is provided on one end side of the outer case 100. The outer case 100 is provided with a communication portion 121 that makes the annular gap S and one end side of an annular space K communicate with each other, and the annular gap S and the outlet portion 122 are connected to each other via the communication portion 121.

The inner case 200 includes a tubular portion 210. A partition wall 211 is provided inside the tubular portion 210. Thereby, the inner case 200 is provided with a hollow portion opening to the other end side. The inner case 200 is provided with a widened portion 212 of which the width in a direction perpendicular to a direction from one end side to the other end side expands from one end side to the other end side. The inner peripheral surface and the outer peripheral surface of the widened portion 212 according to this embodiment are constituted by tapered surfaces. The shapes of the inner peripheral surface and the outer peripheral surface of the widened portion 212 are not limited to the tapered surfaces, and other shapes can be adopted as long as the width in the direction perpendicular to the direction from one end side to the other end side gradually expands. For example, a curved surface having a curved cross-sectional shape cut along a plane including a central axis, a surface having a pyramidal surface shape, and the like can also be adopted.

In the inner case 200, the widened portion 212 is provided with a plurality of windows 212a that communicate with the hollow portion and the annular gap S. On one end side of the widened portion 212 in the inner case 200, the inner diameter and the outer diameter are constant. That is, it is constituted by a cylindrical portion.

The annular gap S of the hollow fiber membrane module 10 according to this embodiment is provided with a plurality of partition walls 220 dividing a space in which a fluid flows into a plurality of spaces in the circumferential direction. In this embodiment, the plurality of partition walls 220 are provided integrally with the inner case 200. More specifically, the plurality of partition walls 220 are constituted by a plurality of plate-shaped portions radially extending outward from the outer peripheral surface of the tubular portion 210 of the inner case 200. With a configuration in which the space in which the fluid flows is divided into a plurality of spaces in the circumferential direction, the plurality of partition walls do not necessarily need to be provided integrally with the inner case 200. The spaces separated by the plurality of partition walls 220 do not need to be completely separated, and adjacent spaces may be partially connected to each other.

Here, the annular space K provided outside the annular gap S in the radial direction is configured to connect the plurality of spaces separated by the plurality of partition walls 220 and the outlet portion 122. That is, the communication portion 121 is provided to connect at least the plurality of spaces separated by the plurality of partition walls 220 and the annular space K. A plurality of communication portions 121 may be provided at intervals in the circumferential direction so as to connect the plurality of spaces separated by the plurality of partition walls 220 and the annular space K, or the communication portion 121 may be provided over the entire circumference. The outlet portion 122 may be provided in at least one place in the circumferential direction, and the number of outlet portions 122 can be appropriately set in accordance with the dimensions and the usage environment of the hollow fiber membrane module 10.

With respect to the hollow fiber membrane module 10 configured as described above, a wet gas is supplied to the hollow portion of the inner case 200 by the wet gas supply device 20. A dry gas is supplied into each of the hollows of the plurality of hollow fiber membranes 300 from the sealing fixing portion 410 on one end side by the dry gas supply device 30. This point will be described in more detail.

A wet gas is supplied from the wet gas supply device 20 to the hollow portion (arrow A1 in Fig. 2) and enters the annular gap S through the plurality of windows 212a (arrow A2). The wet gas in the annular gap S passes through the outside of the hollow fiber membrane 300, flows from the communication portion 121 to the annular space K (arrow A3), and then flows from the outlet portion 122 to the outside of the outer case 100 (arrow A4). A dry gas is supplied into each of the hollows of the plurality of hollow fiber membranes 300 from the sealing fixing portion 410 on one end side by the dry gas supply device 30 (arrow B1), and flows into each of the hollow fiber membranes 300 (arrow B2). Thereafter, the dry gas is discharged from the sealing fixing portion 420 on the other end side (arrow B3). In the process described above, due to a membrane separation action of the hollow fiber membranes 300, moisture in the wet gas moves to the dry gas side, the dry gas is humidified, and the wet gas is dehumidified.

### <Advantages of hollow fiber membrane module and dehumidification/humidification device according to this embodiment>

According to this embodiment, a configuration is adopted in which a wet gas flow from the plurality of windows 212a provided in the inner case 200 to the outlet portion 122 provided in the outer case 100. For this reason, all of the entirety of the plurality of hollow fiber membranes 300 provided in the annular gap S between the inner case 200 and the outer case 100 can contribute to a membrane separation action. Since a fluid that is supplied to the hollow portion of the inner case 200 and enters the annular gap S from the plurality of windows 212a flows through the spaces separated by the plurality of partition walls 220, a flow rate of the fluid that flows directly to the outlet portion 122 can be reduced. Thus, it is possible to improve a rate of contribution of the hollow fiber membranes 300 to a membrane separation action. Thereby, it is possible to achieve an improvement in dehumidification/humidification performance.

In this embodiment, since the plurality of partition walls 220 are provided integrally with the inner case 200, a separate operation of installing the partition walls 220 is not required. The plurality of partition walls 220 are constituted by a plurality of plate-shaped portions radially extending outward from the outer peripheral surface of the tubular portion 210 of the inner case 200. Thereby, it is possible to curb a reduction in the volume of the annular gap S and to curb a reduction in the number of hollow fiber membranes 300 filled.

In this embodiment, the annular space K connecting the plurality of spaces, which are separated by the plurality of partition walls 220, and the outlet portion 122 is provided on the outer side of the annular gap S in the radial direction. Thereby, it is not necessary to provide the outlet portion 122 corresponding to each of the spaces separated by the partition walls 220.

The inner case 200 according to this embodiment is provided with the widened portion 212 of which the width in a direction perpendicular to a direction from one end side to the other end side expands from one end side to the other end side, and the plurality of windows 212a are provided in the widened portion 212. Thus, in the vicinity of the windows 212a, a fluid passing through the outside of the hollow fiber membranes 300 and a fluid passing through the inside of the hollows of the hollow fiber membranes 300 can easily flow in opposite directions. Thereby, it is possible to enhance a membrane separation action and to enhance dehumidification/humidification performance.

### (Others)

In the above-described embodiment, a configuration in a case where the inner case 200 is provided with the widened portion 212, and the widened portion 212 is provided with the plurality of windows 212a has been described. However, the present invention also includes a configuration in which a widened portion is not provided in an inner case, and a plurality of windows are provided in a portion having a constant width. For example, the inner case 520 having the plurality of windows 522 as illustrated in Fig. 3 described in the prior art is also applicable to the present invention.

### [Reference Signs List]

- 10: Hollow fiber membrane module
- 20: Wet gas supply device
- 30: Dry gas supply device
- 100: Outer case
- 110: Case main body
- 120: Double pipe portion
- 120a: Cylindrical portion
- 120b: Connecting portion
- 121: Communication portion
- 122: Outlet portion
- 200: Inner case
- 210: Tubular portion
- 211: Partition wall
- 212: Widened portion
- 212a: Window
- 220: Partition wall
- 300: Hollow fiber membrane
- 410, 420: Sealing fixing portion
- 430, 440: Buffering portion
- K: Annular space
- S: Annular gap

## Claims

1. A hollow fiber membrane module comprising:
an outer case that has a tubular shape;
an inner case that is disposed inside the outer case;
a plurality of hollow fiber membranes that are provided in an annular gap between the outer case and the inner case; and
a pair of sealing fixing portions that seal the annular gap in a state in which the inside of each of hollows of the hollow fiber membranes is open on one end side and another end side of the outer case and the inner case, and fix the plurality of hollow fiber membranes to the outer case and the inner case, wherein
an outlet portion making the annular gap and the outside of the outer case communicate with each other is provided on the one end side of the outer case, and the inner case is provided with a hollow portion that opens to the other end side and also provided with a plurality of windows making the hollow portion and the annular gap communicate with each other, and
a plurality of partition walls dividing a space, in which a fluid flows, into a plurality of spaces in a circumferential direction are provided in the annular gap.

2. The hollow fiber membrane module according to claim 1, wherein the plurality of partition walls are provided integrally with the inner case.

3. The hollow fiber membrane module according to claim 2, wherein the plurality of partition walls are constituted of a plurality of plate-shaped portions radially extending outward from an outer peripheral surface of a tubular portion of the inner case.

4. The hollow fiber membrane module according to claim 1, 2, or 3, wherein an annular space connecting the plurality of spaces, which are separated by the plurality of partition walls, and the outlet portion is provided outside the annular gap in a radial direction.

5. The hollow fiber membrane module according to any one of claims 1 to 4, wherein the inner case is provided with a widened portion, the width of which in a direction perpendicular to a direction from the one end side to the other end side expands from the one end side to the other end side, and the plurality of windows are provided in the widened portion.

6. A dehumidification/humidification device comprising:
the hollow fiber membrane module according to any one of claims 1 to 5;
a wet gas supply device that supplies a wet gas to the hollow portion; and
a dry gas supply device that supplies a dry gas having a humidity lower than that of the wet gas from the sealing fixing portion on the one end side to the inside of each of the hollows of the plurality of hollow fiber membranes.
